# EUROPEAN PATENT SPECIFICATION

(11) **EP 4 323 162 B1**
(45) Date of publication and mention of the grant of the patent: **04.09.2024**
(21) Application number: 22718806.7
(22) Date of filing: 13.04.2022
(51) Int. Cl.: B26D 1/00, B26D 1/04, B26D 1/40, B26D 5/20, B26D 7/32, B65H 35/06, B65H 35/08, H01G 11/84

(54) **APPARATUS FOR CUTTING AND CONVEYING A STRIP OF MATERIAL AND RELATIVE METHOD FOR PRODUCING ELECTRICAL ENERGY STORAGE DEVICES**
VORRICHTUNG ZUM SCHNEIDEN UND FÖRDERN EINER MATERIALBAHN UND ZUGEHÖRIGES VERFAHREN ZUR HERSTELLUNG VON STROMSPEICHERVORRICHTUNGEN
APPAREIL DE COUPE ET DE TRANSPORT D'UNE BANDE DE MATÉRIAU, ET PROCÉDÉ ASSOCIÉ DE PRODUCTION DE DISPOSITIFS DE STOCKAGE D'ÉNERGIE ÉLECTRIQUE

(30) Priority: 13.04.2021 IT 202100009248
(43) Date of publication of application: 21.02.2024
(73) Proprietor: Manz Italy S.r.l., 40037 Sasso Marconi (BO) (IT)
(72) Inventor: ZAMBONELLI, Luca, 40037 Sasso Marconi (BO) (IT); BARBIERI, Pantaleone, 40037 Sasso Marconi (BO) (IT); SALE, Massimiliano, 40037 Sasso Marconi (BO) (IT)
(74) Representative: Studio Torta S.p.A.
(86) International application number: PCT/IB2022/053458
(87) International publication number: WO 2022/219549

(56) References cited:
- WO-A1-2021/209923
- WO-A2-2019/092585

## Description

### Technical Field of the Invention

The present invention relates to an apparatus for cutting and conveying a strip of material and to a relative method for producing electrical energy storage devices. Such an apparatus and method are known from the publication WO 2019/092585 A2.

In particular, the present invention is advantageously, but not exclusively, applied to the production of rechargeable batteries, more in particular comprising windings, to which the following description will explicitly refer without thereby losing generality.

### State of the Art

In the field of the production of electrical energy storage devices, and in particular of cylindrical batteries or of capacitors, it is known to feed, by means of respective feeding units, the electrode strips and the separator strips along different feeding paths which all converge towards a rotating winding core which is configured to hold and wind (generally around an oblong support) the electrode strips and the separator strips arranged offset relative to each other, so as to form a winding. In particular, it is known to manufacture cylindrical windings around a filiform core (or spine) and with a substantially circular cross-section (forming storage devices of the jelly roll type), or planar windings around a flat core with a non-circular cross-section (both of the spiral wound type, with a continuous electrode and a continuous separator, and with an interrupted electrode and a continuous separator).

Specifically, the known winding methods and apparatuses provide, in the case of non-laminated electrodes, for first feeding the separator strips to the winding core and subsequently, when the separator strips are gripped around the winding core (i.e. only after performing at least one turn around the winding core), for feeding the electrode strips between the separator strips. In this manner, the electrode strips, during the winding, are held and dragged into rotation by the separator strips so as to form a winding. Before the winding is ended, the electrode strips are cut and at least one further closing turn is performed with the separator strips. Once the winding is ended and also the separator strips are cut, the winding is closed by means of, for example, an adhesive tape (in what is known as a taping operation).

Still more specifically, the winding core is typically mounted on a rotating platform arranged and configured so that, at each rotation step of such rotating platform, the winding core is moved between a winding station, where the winding is formed, a closing station, where such already formed winding is closed (taping), and an unloading station, where the closed winding is unloaded.

In recent years, various winding apparatuses have been developed for producing electrical energy storage devices. In these apparatuses, in the final part of the winding step, the electrodes are generally grasped by a gripping assembly which moves linearly in an intermittent manner (parallel to the strip of electrode) and is composed of two clamps which, once they reach the speed of the strip of electrode, close and hold said strip while a cutting assembly cuts the electrode downstream of the gripping assembly. Said clamps are generally used for introducing the flap held thereby, after the cutting, into the next winding.

The linear movement of the gripping assembly (and of the cutting assembly) is currently carried out by means of an electric linear motor, which, however, is subjected to extreme accelerations in the case of high winding speeds. In other words, the linear motor, burdened by the weight of the gripping assembly and of the cutting assembly, accelerates until it reaches the speed of the strip to be cut, grasps it, cuts it and decelerates, keeping gripped the flap upstream of the cut strip. Such flap remains partially hanging from the gripping assembly, which, however, requires a certain deceleration space, making complex the subsequent reinsertion of the strip into the next winding, since the first support for the flap (for example a roller or a pair of rollers), subsequent to the gripping assembly, is necessarily distant from the cutting point since it is necessary to allow the gripping assembly to decelerate.

In order to partially overcome these issues, supports (for example skids or idle rollers) have been added on board the gripping assembly (and thus the aforementioned linear motor), increasing though the mass of the same. As a result, in the high-speed (i.e. at least hundreds of millimetres per second) winding of even very small windings, the linear motor has disproportionately large dimensions with respect to the rest of the automated machine, since it needs the space and the torque necessary to accelerate the entire gripping assembly up to the linear winding speed and subsequently decelerate, after the cutting, until it comes to a stop.

All this thus leads to increasing the bulks and the costs of the automated machine. Moreover, the intermittent movement is a constraint on the increase of the productivity of said automated machine.

The object of the present invention is to provide an apparatus for cutting and conveying a strip of material and a relative method for producing electrical energy storage devices, which allow overcoming, at least partially, the drawbacks of the prior art and are, at the same time, easy and cost-effective to embody.

### Subject and Summary of the Invention

In accordance with the present invention, an apparatus for cutting and conveying a strip of material and a relative method for producing electrical energy storage devices as claimed in the following independent claims and, preferably, in any one of the claims directly or indirectly dependent on the independent claims, are provided.

The claims describe preferred embodiments of the present invention forming integral part of the present description.

### Brief Description of the Drawings

The present invention will now be described with reference to the accompanying drawings, which illustrate some non-limiting example embodiments thereof, wherein:
- Figure 1 is a perspective view of a cutting and conveying apparatus in accordance with the present invention;
- Figure 2 is a perspective and sectional view of the cutting and conveying apparatus of Figure 1;
- Figure 3 is a front and schematic view of a part of an automated machine for producing electrical energy storage devices comprising two apparatuses of Figure 1; and
- Figures 4 to 7 illustrate schematic front views of different operating steps of the apparatus of Figure 1.

### Detailed Description of Preferred Embodiments of the Invention

In the appended figures, reference numeral 1 indicates, as a whole, an apparatus for cutting and conveying a strip 2 of material for producing electrical energy devices.

In particular, the following description will explicitly refer to the, advantageous but not exclusive, use of the apparatus 1 for cutting and conveying an electrode (anode or cathode) strip, and even more particularly for producing capacitors or cylindrical or oval rechargeable batteries, for example of the jelly roll type. In this case, advantageously but not limitedly, the cutting and conveying apparatus is used for cutting the electrode strip so as to allow, with a flap, the closure of a winding in winding step, and for conveying the other flap so as to insert it into the next winding.

Advantageously but not necessarily, the strip 2 of material is a strip 2 of electrode E. In other non-limiting cases, the strip 2 is one or more separator strips or a strip of electrode/separator composite material.

The apparatus 1 comprises an actuator system 3 and a conveying unit 4, which in turn comprises a pair 5 of opposing rollers 6 between which the strip 2 of material transits and of which at least one roller 6 is rotatably operable by the actuator system 3, so as to move the strip 2 along a conveying path CP. In particular, the pair 5 of rollers 6 partially compresses the strip 2 of material, so as to be able to drag/push it by friction.

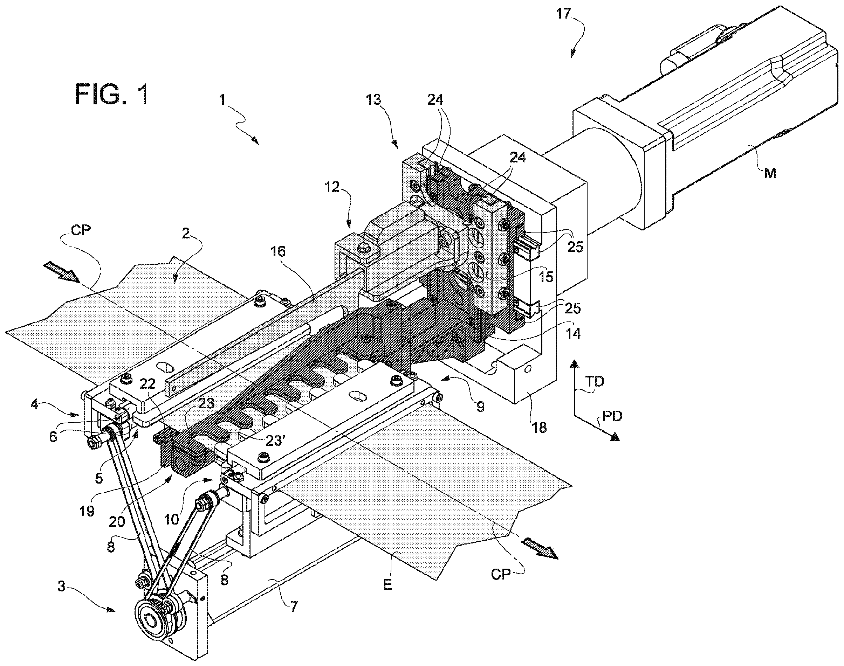

In the non-limiting embodiment of Figure 1, the rotatably operable roller 6 is the bottom roller.

In other non-limiting embodiments, the rotatably operable roller 6 is the top roller 6. In further non-limiting embodiments, both rollers 6 of the pair 5 are rotatably operable with respective opposite synchronous motions.

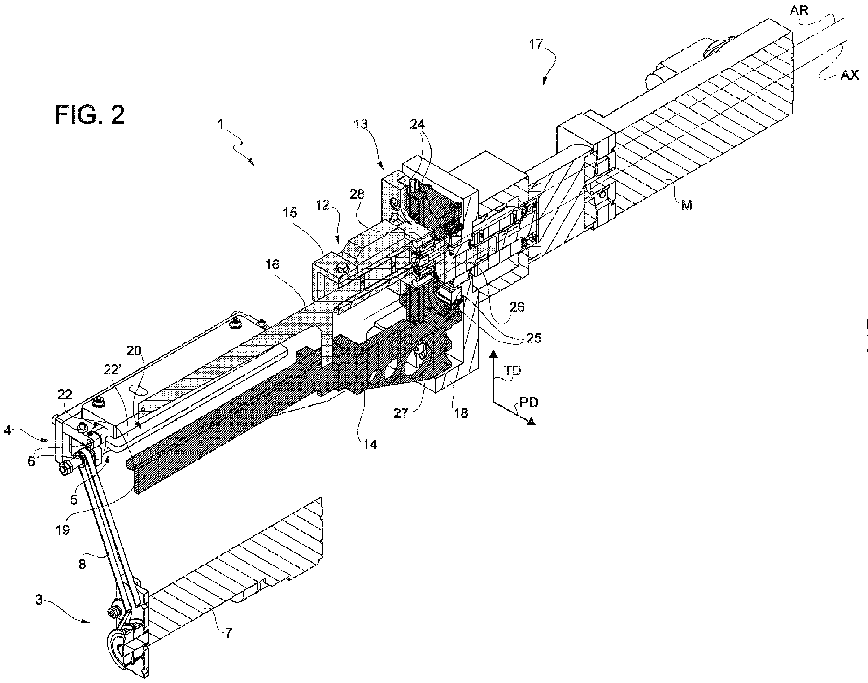

In the non-limiting embodiment of Figures 1 and 2, the actuator system 3 is an electric motor 7, in particular brushless. In other non-limiting embodiments, the actuator system 3 is an electric motor of a different type or arranged differently, for example at or inside the motorized (i.e. rotatably operable) roller 6.

Advantageously but not necessarily, the apparatus 1 comprises motion transmission means configured to space the roller 6 apart from the motor 7. In such manner, the electric motor 7 moves in rotation the roller 6, which can be made with a reduced diameter (for example less than 30 mm). According to the non-limiting embodiment of Figures 1 and 2, the motion transmission means are toothed belts 8. Obviously, it is possible to use other known means for the transmission of the motion such as flat belts, axle bearings, gearwheels...

Advantageously, the apparatus 1 also comprises a conveying unit 9, arranged downstream (along the conveying path CP) of the conveying unit 4 and it too comprising a pair 10 of opposing rollers 11 between which said strip 2 of material transits. The conveying unit 9 allows providing support to the strip 2 of material up to the proximity of a subsequent (for example winding) station so as to facilitate the insertion of the strip of material providing a suitable support.

The apparatus 1 further comprises a cutting unit 12, arranged, along the conveying path CP, between the conveying unit 4 and the conveying unit 9. In particular, the cutting unit 12 comprises (at least) one support element 13, which in turn comprises a portion 14 (illustrated in a dark grey colour in the appended figures) movable along a direction PD parallel to the conveying path CP, and a portion 15 (illustrated in a light grey colour in the appended figures) movable along a direction TD transverse (preferably perpendicular) to the conveying path.

The cutting unit 12 further comprises a blade 16, mounted on board the portion 15 of the support element 13 and configured to transversely (preferably perpendicularly) cut the strip 2 of material during the movement of the portion 15 of the support element 13. Advantageously but not necessarily, the blade 16 is integral with the portion 15 of the support element 13.

Advantageously, the portion 14 of the support element and the portion 15 of the support element are configured to move at least partially synchronously along the direction D parallel to the conveying path CP. In particular, in such manner, the portion 14 of the support element and the portion 15 of the support element are configured to move for at least a section of their motion, more precisely during the cutting, at the same linear speed as the strip 2 of material along the direction PD.

Preferably, the cutting and conveying apparatus 1 further comprises an actuator system 17 configured to cause, by means of a rotary motion, an intermittent motion of at least the portion 14 of the support element 13. In particular, the actuator system 17 comprises an electric motor M, preferably of the brushless type.

Advantageously but not necessarily, the portion 15 of the support element 13 is supported by the portion 14 of the support element 13, in particular wherein the portion 14 of the support element is slidingly coupled to the portion 15 of the support element.

In the non-limiting embodiment of Figures 1 and 2, the portion 14 and the portion 15 are slidingly coupled so as to be able to move relatively (i.e. with respect to each other) along the direction TD. Preferably, the portion 14 and the portion 15 are slidingly coupled by means of linear guides 24 (for example, complementary or with intermediate sliding elements). Sliding along the linear guides 24, the portion 15 moves transversely to the strip 2 of electrode E so as to cut it along the conveying path CP, into a flap 21 upstream of the blade 16 and a flap 21' downstream of the blade 16.

In particular, the linear guides 24 are coupled to each other and arranged along a direction parallel to the direction TD, preferably they are perpendicular to the conveying path CP.

Advantageously but not necessarily, as illustrated in Figures 1 and 2, the support element 13 comprises a base body 18 (in particular on which the actuator system 17 is mounted, for example a machine plate or any element that is substantially fixed to/integral with a machine frame). In particular, the portion 14 of the support element 13 is supported by the base body 18. More specifically, the portion 14 of the support element 13 is slidingly coupled to the base body 18.

In the non-limiting embodiment of Figures 1 and 2, the portion 14 and the body 18 are slidingly coupled so as to be able to move relatively (i.e. with respect to each other) along the direction PD. Preferably, the portion 14 and the body 18 are slidingly coupled by means of linear guides 25 (for example, complementary or with intermediate sliding elements). Sliding along the linear guides 25, the portion 14 moves parallel to the strip 2 of electrode E so as to support it along the conveying path CP, before and after the cutting. In particular, the portion 14 is configured to support at least the flap 21 upstream of the blade 16, preferably also the flap 21' downstream of the blade 16.

According to the non-limiting embodiments of the appended figures, the cutting unit 12 comprises a counter-blade 19 mounted on board the support element 13, in particular on board the portion 14, and is configured to assist the blade 16 in cutting the strip (2) of material, more in particular by providing a contrast. Obviously, it is understood that the blade and counter-blade can be exchanged with each other without thereby departing from the scope of protection of the present application.

In particular, the counter-blade 19 is arranged transversely to the strip of material and at an average distance of less than 10 mm (preferably less than 5 mm) from the same.

Advantageously but not necessarily, the apparatus 1 is configured so that the distance between the counter-blade 19 and the conveying path CP of the strip 2 is substantially constant.

Advantageously but not necessarily, the counter-blade 19 is integral with the portion 14 of the support element 13.

According to some advantageous non-limiting embodiments, like those illustrated in the appended figures, the apparatus 1 comprises at least one support element 20 configured to support and accompany, upstream or downstream (of the blade 16 or) of the counter-blade 19, the flap 21, 21' of the strip 2 of material once the same has been cut. In such manner, it is possible to support the flaps 21, 21' after the cutting and for the next insertion. Specifically, the flaps 21, 21', in the absence of a support, tend to bend slightly in the cutting direction TD (when the blade is lowered), which makes the subsequent insertion of the flap 21 for the production of the next winding difficult.

In the non-limiting embodiment of Figure 1, the support element 20 comprises at least a (fixed or movable) rest element 22 upstream of the counter-blade 19 and preferably integral with the portion 14. In such manner, after the cutting, the element 22 acts both as a rest in order to prevent a bending of the flap 21, and as a guide element in order to convey the flap 21 towards the next winding, i.e. towards the conveying unit 9. Preferably, the rest element 22 is arranged at (i.e. at a distance less than 50 mm, preferably less than 20 mm from) the counter-blade 19. Specifically, the closer the element 22 is to the counter-blade 19, the better the support provided to the flap 21. In particular, the element 22 has a bevelled oblong shape and is arranged transversely (perpendicularly) to the conveying path CP.

Advantageously but not necessarily, the support element 20 comprises at least one (fixed or movable) rest element 22' upstream of the counter-blade 19 and preferably integral with the conveying unit 4. In such manner, the element 22' acts both as a rest (especially in the case of vertical conveying paths, as illustrated in the following) in order to prevent a bending of the flap 21, and as a guide element in order to convey the flap 21 towards the next winding, i.e. towards the conveying unit 9.

Preferably, the rest element 22' is arranged at (i.e. at a distance less than 50 mm, preferably less than 20 mm from) the rollers 6. Specifically, the closer the element 22' is to the rollers 6, the better the guidance provided to the strip 2 of material. In particular, the element 22' has a bevelled oblong shape and is arranged transversely (perpendicularly) to the conveying path CP, preferably on the same side as the blade 16, i.e. on the side opposite the element 22.

Alternatively or additionally, and as illustrated in the non-limiting embodiment of Figure 1, the support element 20 further comprises a comb clamp 23.

Preferably, the clamp 23 is arranged downstream of the counter-blade 19 and is integral with the portion 14. In particular, the comb clamp 23 has its teeth facing a comb clamp 23' complementary to the comb clamp 23 and integral with the conveying unit 10.

The comb clamps 23, 23' allow both supporting the flap 21' after the cutting of the strip 2 of electrode, and facilitating the insertion of the flap 21 towards the conveying unit 10, between the rollers 11, i.e. towards the next winding.

Advantageously but not necessarily, in the pair 10 of rollers 11, at least one roller 11 is rotatably operable, in particular synchronously with the operated roller 6, so as to move said strip 2 along the conveying path CP. In such manner, it is possible to move close, to the winding in which the strip 2 is to be inserted, the dragging point of the strip 2 from the conveying unit 4 towards the conveying unit 10.

In some preferred non-limiting cases, the pair 5 of rollers 6 and/or the pair 10 of rollers 11 are configured to be opened (independently of each other), in particular following the cutting so as to accommodate the cut flap 21 of the strip of material advanced by means of the conveying unit 4. In such manner, for example, the comb clamps 23, 23', cooperating, support the flap 21 until transiting between the open rollers 11, allowing, following the closure of the pair 10 of rollers 11, dragging the strip 2 inserting the flap 21 into the next winding.

Alternatively or additionally, the pair 5 of rollers 6 and/or the pair 10 of rollers 11 are configured to be opened (independently of each other) during a winding step of the strip 2. In such manner, it is possible to reduce the stress on the strip 2 of material currently in winding step.

In the non-limiting embodiment shown in the appended figures, the portion 15 of the support element 13 is configured to perform a substantially circular movement (in particular a translation). In particular, the portion 14 of the support element 13 is simultaneously configured to perform a substantially intermittent linear movement parallel to the direction PD. More in particular, the portion 14 of the element 13 and the portion 15 of the element 13 are configured to move at the same linear speed along the direction PD, more precisely, during the entire cutting step, the portion 14 of the element 13 and the portion 15 of the element 13 are configured to move at the same linear speed as the strip 2 of material along the conveying path CP.

Advantageously but not necessarily, and as illustrated in the non-limiting embodiments of the appended figures, the portion 14 and the portion 15 of the support element 13 are both moved by the actuator system 17.

In the non-limiting embodiment of Figures 1 and 2, the actuator system 17 is directly connected only to the portion 15 of the element 13.

In particular, as illustrated in the non-limiting embodiment of Figure 2, the apparatus 1 comprises an eccentric element 26, which connects, by means of a rotating element such as a bearing 28, the actuator system 17 (i.e. the motor M) to the portion 15 of the element 13. In such manner, the circular (eccentric) movement of the portion 15, thus of the blade 16, corresponds to the rotation of the motor M (taking into account potential reductions). More in particular, the eccentric element 26 is a crank element.

According to the non-limiting embodiment of Figure 2, the portion 14 of the element 13 comprises a through-slot 27, passed through by the eccentric element 26, which, during the rotation of the actuator system 17 moves inside the slot 27. In particular, the slot 27 has an elongated shape along the direction TD.

In use, the rotation of the motor M determines, by means of the eccentric element 26, a circular movement (translation) of the blade 16. Such circular movement is possible thanks to the sliding coupling generated by the linear guides 24 and 25 (which determine the two degrees of freedom necessary for the portion 15 to move in a circular manner).

At the same time, still due to the sliding coupling generated by the linear guides 24 and 25, the portion 14 is interposed between the base body 18 and the portion 15 (operated directly by the actuator system 17). In such manner, the portion 14 has a single degree of freedom thanks to the linear guides 25. Therefore, the portion 14, upon the circular movement of the portion 15, will move with a linear movement along the direction PD and parallel to the conveying path CP.

Therefore, in use, the strip 2 is conveyed at a substantially constant speed (by the unit 4 and/or dragged by the rotation of the winding in which it is engaged). At the moment of the closing of the winding, the strip 2, for example of electrode E, must be cut with relative precision, so as to meet the requirements of the client. Once the predefined length has been reached, the actuator system 17 starts working, operating the motor M and bringing the portion 15 (and therefore pushing also the portion 14) to a speed such to have a component parallel to the direction PD equal to the speed of the strip 2. As the movement of the motor M continues, the cutting unit 12 divides the strip 2 into two flaps 21 and 21', which respectively lay down at the element 22 and at the comb clamps 23. In some embodiments, the conveying unit 4 immediately slows the flap 21 down letting it rest on the element 22, in other non-limiting embodiments, the conveying unit 4 gently pushes the flap 21, as soon as the cutting is completed, up to engaging at least the comb clamps 23 (so as to have support in order to subsequently engage the clamps 23' and the pair 10 of rollers 11). In the meantime, the flap 21' is returned by the winding being formed. Subsequently, the flap 21 is pushed by the conveying unit 4 and/or by the conveying unit 9 into the next winding. As soon as the flap 21 has been grasped by the strips of separator S of the next winding, the cutting unit returns to a waiting position that allows reaching again, at the moment of the next cutting, the linear speed of the strip 2 of material to be cut.

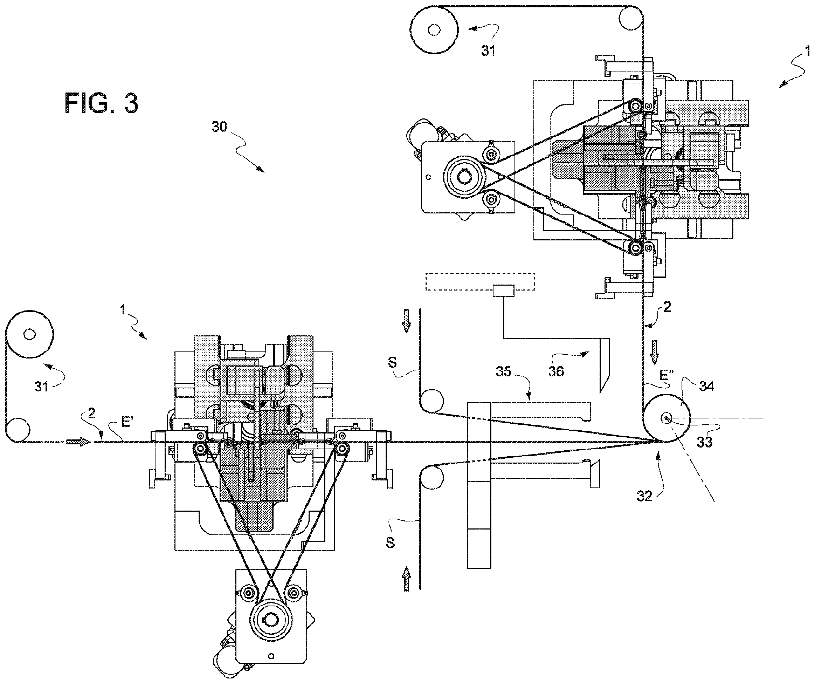

In accordance with a further aspect of the present invention, a machine 30 (at least partially illustrated in Figure 3) for producing electrical energy storage devices comprising at least one apparatus 1 according to the foregoing description is provided. Preferably, the machine 30 comprises two apparatuses 1, respectively for the cathode E' and the anode E".

In particular, the machine 30 comprises a feeding system 31 (for each strip 2, i.e. for each electrode E', E"), configured to feed, in particular at a constant speed, the strip 2 of material to be wound along the conveying path CP.

Preferably, the machine 30 also comprises a winding apparatus 32 comprising a core 33 on which to wind the strip 2 of material forming a winding 34. In particular, the winding 34 is formed by winding around the core 33 the two electrodes E', E" , interspersed with two strips of separator material S. In particular, the machine 30 further comprises a gripping unit 35 and a cutting unit 36, respectively configured to grasp and cut the strips of separator S.

Advantageously but not necessarily, the cathode E' is inserted between the two separators S, while the anode E" is inserted in an independent manner as the innermost layer of the four (i.e. the two electrodes and the two separators) . In such manner, thanks to the independence in the management of the electrodes E' and E", it is possible to close the winding 34 with one or more turns of outer anode E'' (anyway inside a closure of separator S, but without having the cathode E' facing it).

In the non-limiting embodiment of Figure 3, the cathode E' is inserted into the winding 34 from a direction substantially perpendicular to the one from which the anode E" is inserted.

According to a further non-limiting embodiment not illustrated, the machine 30 comprises a further pair of rollers (idle or motorized) arranged downstream of the conveying unit 9, before the winding 34.

In particular, this further pair of rollers is arranged at a distance of no more than 150 mm, preferably no more than 100 mm, from the rollers 11 of the conveying unit 9. Preferably, the further pair of rollers is provided along the feeding path of the anode.

In accordance with a further aspect of the present invention, a method for producing electrical energy storage devices using a cutting and conveying apparatus 1 according to the foregoing description and/or a machine 50 according to the foregoing description is provided.

In particular, the method comprising the steps of:
- conveying the strip 2 of material by means of the conveying unit 4 comprising the pair 5 of opposing rollers 6 driving in rotation at least one roller 6 so as to move the strip 2 along the conveying path CP;
- supporting by means of the conveying unit 9 comprising the pair 10 of rollers 11 opposite the strip 2 of material;
- cutting the strip 2 of material by means of the cutting unit 12 placed between the conveying unit 4 and the conveying unit 9, and comprising the support element 13, which comprises in turn the portion 14 movable along the direction PD parallel to the conveying path CP, and the portion 15 movable along the direction TD transverse to the conveying path CP; wherein the cutting unit 12 comprises the blade 16, mounted on board the portion 15 of the support element 13, which cuts transversely the strip 2 of material during the movement of the portion 15 of the support element 13.

Advantageously, the portion 14 of the support element 13 and the portion 15 of the support element 13 are moved (at least partially) synchronously along the direction PD parallel to the conveying path CP.

In particular, during the cutting step, the actuator system 17 is rotatably controlled so as to cause, by means of a rotary motion, an intermittent motion of at least the portion 14 of the support element 13.

Advantageously but not necessarily, the method comprises the further step of winding the strip 2 of electrode E around the winding core 33 to form the winding 34.

In some preferred non-limiting cases, the method comprises the step of controlling the actuator system 17 so as to move (translate) the portions 14 and 15 along a respectively alternate linear and circular path. In particular, the actuator system 17 is controlled to move the portion 15 only, whereas the portion 14 is consequently dragged by means of the linear guides 24 and 25.

Specifically, the linear guides 24 constrain the portion 14 to move along the linear guides 25.

Advantageously but not necessarily, the actuator system 17 is moved with a motion profile comprising at least two sub-steps: a cutting step and a recovery step. In particular, during the cutting step, the system 17 is controlled so as to move the portion 14 and/or the portion 15 with a speed having a component along the direction PD that is substantially constant, specifically equal to the winding speed of the strip 2. More in particular, during the recovery step, the system 17 is controlled so as to move the portion 14 and/or the portion 15 with a speed having a component along the direction PD that is variable and different from the speed of the strip 2.

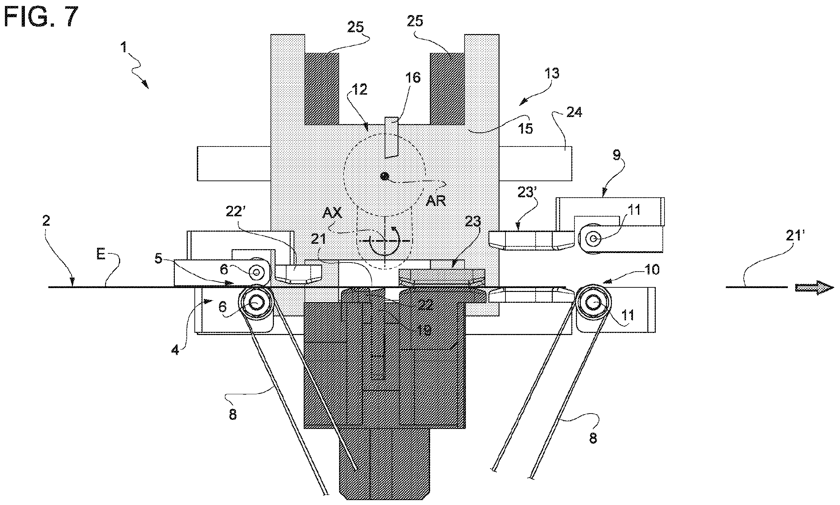

Advantageously but not necessarily, as soon as the strip 2 of material is cut, the conveying unit 9 is opened (see Figure 7). In particular, preferably, the flap 21 continues to be pushed by the conveying unit 4 until it engages (reaches and stops at) the rollers 11 or in any case the comb clamp 23, 23'.

Preferably, after the cutting, the flap 21, upon reaching the conveying unit 9 awaits the arrival of a new core 33. After the arrival of the new core 33, the unit 4 and/or the unit 9 is controlled for inserting the strip 2 into the new winding 34 around the new core 33.

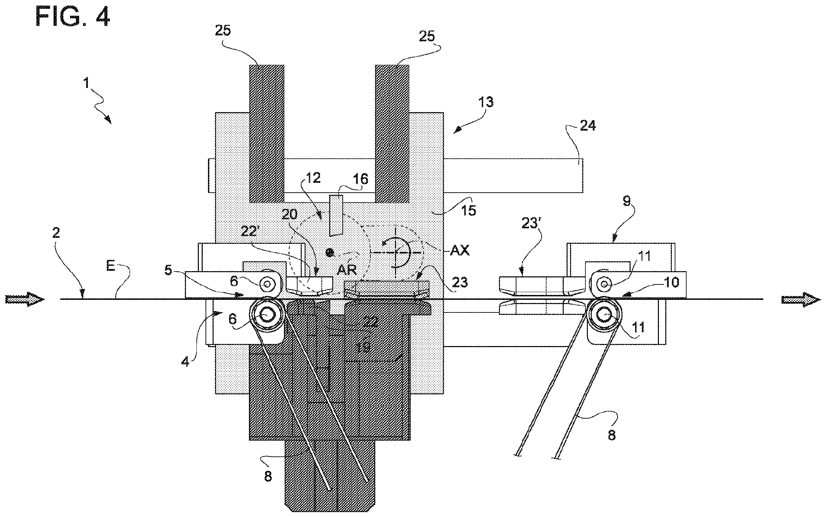

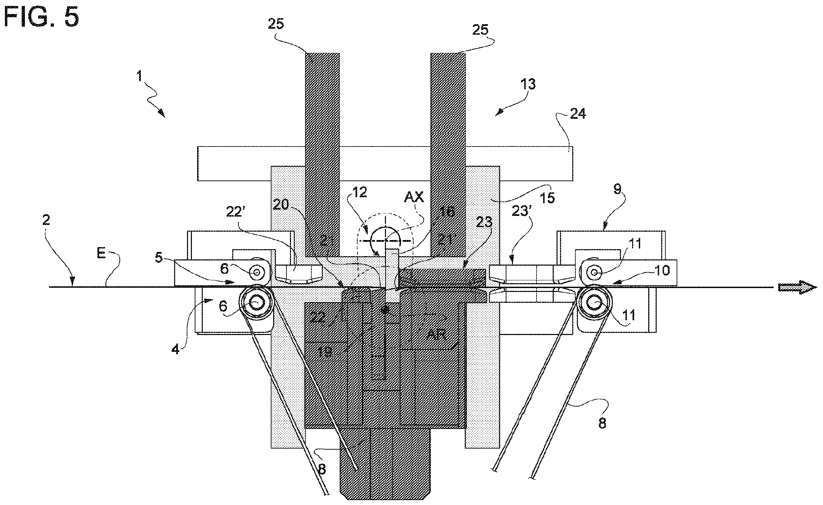

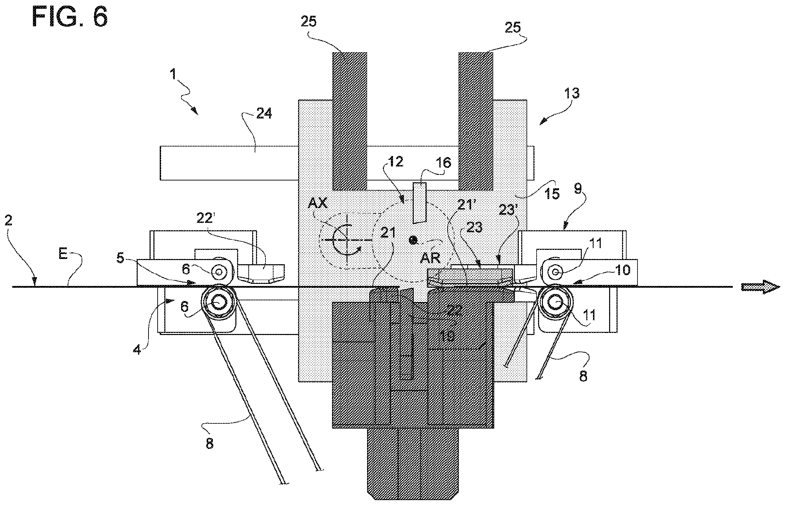

In use, the material 2 is fed to the apparatus 1 in the form of a strip. In particular, the strip 2 is both conveyed by the conveying unit 4 and/or 9, and dragged by the core 33 which rotates for forming the winding 34 recalling the strip 2. When it is time to cut the strip 2 in order to complete the winding 34, the actuator system 17 is activated (see Figures 4-7), which, by rotating around the axis AX, moves the portion 15 and thus the blade 16. At the same time, the actuator system 17 moves the portion 14 and thus the counter-blade 19 and the support element 20.

Advantageously but not necessarily, the moment when the strip 2 is cut is when the blade 16 is located at the lowest position in its circular path, engaging the counter-blade 19. As mentioned above, the flap 21' is returned by the rotation of the core 33, whereas the flap 21 is stopped while it waits for a new core.

Although the invention described above makes particular reference to a very specific example embodiment, it is not to be considered limited to such example embodiment, falling within its scope all the variations, modifications or simplifications covered by the appended claims, such as, for example, a different geometry or composition of the machine, a different type of actuator systems, a different type of cutting, etc.

The apparatuses, the machine and the method described above entail numerous advantages.

First of all, they allow cutting a strip that is wound at very high speed (hundreds of mm per second), since the limits imposed by the alternating motion of the linear motors currently in use are overcome as the motor M is controlled with a one-directional rotary motion.

Additionally, the bulks can be considerably reduced, since it will no longer be necessary to ensure a certain distance for the braking of the system according to the prior art, as the gripping elements (i.e. the rollers 6 and 11) are fixed and the blade, by continuing its circular motion, leaves the conveying path without requiring further bulk.

Moreover, contrary to the known rotary cutting with blade and counter-blade mounted on two respective drums, the present invention allows constantly supporting the strip, so as to greatly reduce the risk that the electrode can be ruined or that it can fail the insertion at the next core.

A further advantage of the present invention lies in bringing the insertion point (for example the rollers 11 or the further rollers described above in the case of the anode) closer to the core, thus simplifying the insertion operations and making them more reliable, preventing the presence of long flaps of material that are difficult to control.

## Claims

1. Apparatus (1) for cutting and conveying a strip (2) of material for producing electrical energy storage devices; the apparatus (1) comprises:
- a first conveying unit (4) configured to convey said strip (2) along a conveying path (CP);
- a cutting unit (12), arranged downstream of the first conveying unit (4) and **characterised by** comprising a support element (13), which comprises in turn a first portion (14) movable along a first direction (PD) parallel to the conveying path (CP), and a second portion (15) movable at least along a second direction (TD) transverse to the conveying path (CP); the cutting unit (12) further comprising a blade (16), mounted on board the second portion (15) of the support element (13) and configured to transversely cut the strip (2) of material during the movement of the second portion (15) of the support element (13);
wherein the first portion (14) of the support element (13) and the second portion (15) of the support element (13) are configured to move at least partially synchronously along the direction (PD) parallel to the conveying path (CP);
the cutting and conveying apparatus (1) further comprising a first actuator system (17) configured to cause, by means of a rotary motion, an intermittent motion of at least the first portion (14) of the support element (13).

2. Apparatus (1) according to claim 1 and comprising a second actuator system (3); and comprising a first conveying unit (4), which comprises a first pair (5) of opposing rollers (6) between which said strip (2) of material transits and of which at least one first roller is rotatably operable by the second actuator system (3), which is configured to move said strip (2) along the conveying path (CP); in particular, the apparatus (1) comprises a second conveying unit (9), arranged downstream of the first conveying unit (4) and comprising a second pair (10) of opposing rollers (11) between which said strip (2) of material transits; in particular, the cutting unit (12) is arranged between the first conveying unit (4) and the second conveying unit (9).

3. Apparatus (1) according to claim 1 or 2, wherein the second portion (15) of the support element (13) is supported by the first portion (14) of the support element (13), in particular wherein the second portion (15) of the support element (13) is slidingly coupled to the first portion (14) of the support element (13).

4. Apparatus (1) according to any one of the preceding claims, wherein the support element (13) comprises a base body (18); and wherein the first portion (14) of the support element (13) is supported by the base body (18), in particular wherein the first portion (14) of the support element (13) is slidingly coupled to the base body (18).

5. Apparatus (1) according to any one of the preceding claims, wherein the blade (16) is integral with the second portion (15) of the support element (13).

6. Apparatus (1) according to any one of the preceding claims, wherein the cutting unit (12) comprises a counter-blade (19) mounted on board the support element (13), in particular on board the first portion (14), and configured to assist the blade (16) in cutting the strip (2) of material by providing a contrast; in particular, wherein the counter-blade (19) is integral with the first portion (14) of the support element (13).

7. Apparatus (1) according to any one of the preceding claims and comprising at least one support element (20) configured to support and accompany, upstream or downstream of the counter-blade (19), a flap (21, 21') of the strip (2) of material once the same has been cut.

8. Apparatus (1) according to any one of the preceding claims, wherein, in the second pair (10) of rollers (11), at least one second roller is rotatably operable, in particular synchronously with the first roller, so as to move said strip (2) along the conveying path (CP).

9. Apparatus (1) according to any one of the preceding claims, wherein the first and/or the second pair (10) of rollers (6, 11) is configured to be opened, in particular following the cutting so as to accommodate a cut flap (21, 21') of the strip (2) of material advanced by means of the first conveying unit (4).

10. Apparatus (1) according to any one of the preceding claims, wherein the strip (2) of material is a strip (2) of electrode (E).

11. Apparatus (1) according to any one of the preceding claims wherein the second portion (15) of the support element (13) is configured to perform a substantially circular movement.

12. Apparatus (1) according to any one of the preceding claims, wherein the first portion (14) and the second portion (15) of the support element (13) are both moved by the first actuator system (17).

13. A machine (30) for producing electrical energy storage devices comprising: an apparatus (1) according to any one of claims 1 to 12; a feeding system (31), configured to feed a strip (2) of material to be wound along the conveying path (CP); and a winding apparatus (1) comprising a core (33) on which to wind the strip (2) of material forming a winding (34).

14. A method for producing electrical energy storage devices comprises the steps of:
- conveying a strip (2) of material by means of a first conveying unit (4) comprising a first pair (5) of opposing rollers (6) driving in rotation at least a first roller so as to move said strip (2) along a conveying path (CP) ;
- supporting by means of a second conveying unit (9) comprising a second pair (10) of rollers (11) opposite said strip (2) of material;
- cutting the strip (2) of material by means of a cutting unit (12) placed between the first conveying unit (4) and the second conveying unit (9), and **characterised by** comprising a support element (13), which comprises in turn a first portion (14) movable along a first direction (PD) parallel to the conveying path (CP), and a second portion (15) movable at least along a second direction (TD) transverse to the conveying path (CP); wherein the cutting unit (12) further comprises a blade (16), mounted on board the second portion (15) of the support element (13), which cuts transversely the strip (2) of material during the movement of the second portion (15) of the support element (13);
wherein the first portion (14) of the support element (13) and the second portion (15) of the support element (13) are moved at least partially synchronously along the direction (PD) parallel to the conveying path (CP);
wherein, during the cutting step, a first actuator system (17) is rotatably controlled so as to cause, by means of a rotary motion, an intermittent motion of at least the first portion (14) of the support element (13).

15. Method according to claim 14, wherein the strip (2) of material is a strip (2) of electrode (E); the method comprising the further step of winding said strip (2) of electrode (E) around a winding core (33).

## Patentansprüche

1. Vorrichtung (1) zum Schneiden und Fördern eines Streifens (2) aus Material zur Herstellung von elektrischen Energiespeichern; die Vorrichtung (1) weist auf:
- eine erste Fördereinheit (4), die ausgebildet ist, um den Streifen (2) entlang eines Förderweges (CP) zu fördern;
- eine Schneideeinheit (12), die stromabwärts der ersten Fördereinheit (4) angeordnet ist und **dadurch gekennzeichnet ist, dass** sie ein Stützelement (13) aufweist, das wiederum einen ersten Abschnitt (14), der entlang einer ersten Richtung (PD) parallel zu dem Förderweg (CP) beweglich ist, und einen zweiten Abschnitt (15) aufweist, der zumindest entlang einer zweiten Richtung (TD) quer zu dem Förderweg (CP) beweglich ist; wobei die Schneideinheit (12) ferner eine Klinge (16) aufweist, die an Bord des zweiten Abschnitts (15) des Stützelements (13) angebracht und ausgebildet ist, um den Streifen (2) des Materials während der Bewegung des zweiten Abschnitts (15) des Stützelements (13) quer zu schneiden;
wobei der erste Abschnitt (14) des Stützelements (13) und der zweite Abschnitt (15) des Stützelements (13) ausgebildet sind, um sich zumindest teilweise synchron entlang der Richtung (PD) parallel zum Förderweg (CP) zu bewegen;
wobei die Vorrichtung (1) ferner ein erstes Aktuator-System (17) aufweist, das ausgebildet ist, um mittels einer Drehbewegung eine intermittierende Bewegung mindestens des ersten Abschnitts (14) des Stützelements (13) zu bewirken.

2. Vorrichtung (1) nach Anspruch 1 und aufweisend ein zweites Aktuatorsystem (3); und aufweisend eine erste Fördereinheit (4), die ein erstes Paar (5) von gegenüberliegenden Rollen (6) aufweist, zwischen denen der Streifen (2) aus Material durchläuft und von denen mindestens eine erste Rolle drehbar durch das zweite Aktuatorsystem (3) betätigt werden kann, das ausgebildet ist, um den Streifen (2) entlang der Förderbahn (CP) zu bewegen; wobei die Vorrichtung (1) insbesondere eine zweite Fördereinheit (9) aufweist, die stromabwärts der ersten Fördereinheit (4) angeordnet ist und ein zweites Paar (10) gegenüberliegender Rollen (11) aufweist, zwischen denen der Streifen (2) des Materials hindurchläuft; wobei insbesondere die Schneideinheit (12) zwischen der ersten Fördereinheit (4) und der zweiten Fördereinheit (9) angeordnet ist.

3. Vorrichtung (1) nach Anspruch 1 oder 2, wobei der zweite Teil (15) des Stützelements (13) von dem ersten Abschnitt (14) des Stützelements (13) getragen wird, insbesondere wobei der zweite Abschnitt (15) des Stützelements (13) gleitend mit dem ersten Abschnitt (14) des Stützelements (13) verbunden ist.

4. Vorrichtung (1) nach einem der vorangehenden Ansprüche, wobei das Stützelement (13) einen Grundkörper (18) aufweist; und wobei der erste Abschnitt (14) des Stützelements (13) von dem Grundkörper (18) getragen wird, insbesondere wobei der erste Abschnitt (14) des Stützelements (13) gleitend mit dem Grundkörper (18) gekoppelt ist.

5. Vorrichtung (1) nach einem der vorangehenden Ansprüche, wobei die Klinge (16) mit dem zweiten Abschnitt (15) des Stützelements (13) fest verbunden ist.

6. Vorrichtung (1) nach einem der vorangehenden Ansprüche, wobei die Schneideeinheit (12) eine Gegenklinge (19) aufweist, die auf dem Stützelement (13), insbesondere auf dem ersten Abschnitt (14), angebracht und so ausgebildet ist, dass sie die Klinge (16) beim Schneiden des Streifens (2) unterstützt, indem sie einen Kontrast erzeugt; insbesondere, wobei die Gegenklinge (19) mit dem ersten Abschnitt (14) des Stützelements (13) verbunden ist.

7. Vorrichtung (1) nach einem der vorangehenden Ansprüche und aufweisend mindestens ein Stützelement (20), das ausgebildet ist, um stromaufwärts oder stromabwärts der Gegenklinge (19) eine Lasche (21, 21') des Materialstreifens (2) zu stützen und zu begleiten, sobald derselbe geschnitten worden ist.

8. Vorrichtung (1) nach einem der vorangehenden Ansprüche, wobei in dem zweiten Paar (10) von Rollen (11) mindestens eine zweite Rolle drehbar angetrieben werden kann, insbesondere synchron mit der ersten Rolle, um den Streifen (2) entlang des Förderweges (CP) zu bewegen.

9. Vorrichtung (1) nach einem der vorangehenden Ansprüche, wobei das erste und/oder das zweite Paar (10) von Rollen (6, 11) ausgebildet ist, um geöffnet zu werden, insbesondere nach dem Schneiden, um eine geschnittene Lasche (21, 21') des Streifens (2) aus Material aufzunehmen, der mittels der ersten Fördereinheit (4) vorgeschoben wird.

10. Vorrichtung (1) nach einem der vorangehenden Ansprüche, wobei der Streifen (2) aus Material ein Streifen (2) einer Elektrode (E) ist.

11. Vorrichtung (1) nach einem der vorangehenden Ansprüche, wobei der zweite Abschnitt (15) des Stützelements (13) ausgebildet ist, um eine im wesentlichen kreisförmige Bewegung auszuführen.

12. Vorrichtung (1) nach einem der vorangehenden Ansprüche, wobei der erste Abschnitt (14) und der zweite Abschnitt (15) des Stützelements (13) beide durch das erste Aktuator-System (17) bewegt werden.

13. Eine Maschine (30) zur Herstellung von elektrischen Energiespeichern, die aufweist: eine Vorrichtung (1) nach einem der Ansprüche 1 bis 12; ein Zuführsystem (31), das zum Zuführen eines Streifens (2) des zu wickelnden Materials entlang des Förderweges (CP) ausgebildet ist; und eine Vorrichtung (1) zum Wickeln, die einen Kern (33) aufweist, auf den der Streifen (2) des Materials zur Bildung einer Wicklung (34) gewickelt wird.

14. Ein Verfahren zur Herstellung elektrischer Energiespeicher weist die folgenden Schritte auf:
- Fördern eines Streifens (2) aus Material mittels einer ersten Fördereinheit (4), die ein erstes Paar (5) gegenüberliegender Rollen (6) aufweist, die mindestens eine erste Rolle in Drehung versetzen, um den Streifen (2) entlang eines Förderweges (CP) zu bewegen;
- Stützen mittels einer zweiten Fördereinheit (9), die ein zweites Paar (10) von Rollen (11) aufweist, die dem Streifen (2) aus Material gegenüberliegen;
- Schneiden des Streifens (2) aus Material mittels einer Schneideeinheit (12), die zwischen der ersten Fördereinheit (4) und der zweiten Fördereinheit (9) angeordnet ist, und **dadurch gekennzeichnet ist, dass** sie ein Stützelement (13) aufweist, das seinerseits einen ersten Abschnitt (14), der entlang einer ersten Richtung (PD) parallel zu dem Förderweg (CP) beweglich ist, und einen zweiten Abschnitt (15) aufweist, der zumindest entlang einer zweiten Richtung (TD) quer zu dem Förderweg (CP) beweglich ist; wobei die Schneideeinheit (12) ferner eine Klinge (16) aufweist, die an Bord des zweiten Abschnitts (15) des Stützelements (13) angebracht ist und die den Streifen (2) des Materials während der Bewegung des zweiten Abschnitts (15) des Stützelements (13) in Querrichtung schneidet;
wobei der erste Abschnitt (14) des Stützelements (13) und der zweite Abschnitt (15) des Stützelements (13) zumindest teilweise synchron entlang der Richtung (PD) parallel zum Förderweg (CP) bewegt werden;
wobei während des Schneideschritts ein erstes Aktuator-System (17) drehbar geregelt wird, um durch eine Drehbewegung eine intermittierende Bewegung zumindest des ersten Abschnitts (14) des Stützelements (13) zu bewirken.

15. Verfahren nach Anspruch 14, wobei der Streifen (2) aus Material ein Streifen (2) einer Elektrode (E) ist; das Verfahren weist den weiteren Schritt des Wickelns des Streifens (2) der Elektrode (E) um einen Wickelkern (33) auf.

## Revendications

1. Appareil (1) de coupe et de transport d'une bande (2) de matériau pour la production de dispositifs de stockage d'énergie électrique ; l'appareil (1) comprend :
- une première unité de transport (4) configurée pour transporter ladite bande (2) le long d'une trajectoire de transport (CP) ;
- une unité de coupe (12), agencée en aval de la première unité de transport (4) et **caractérisé en ce qu'**il comprend un élément de support (13), qui comprend à son tour, une première partie (14) mobile le long d'une première direction (PD) parallèle à la trajectoire de transport (CP), et une deuxième partie (15) mobile au moins le long d'une deuxième direction (TD) transversale par rapport à la trajectoire de transport (CP) ; l'unité de coupe (12) comprenant en outre une lame (16), montée à bord de la deuxième partie (15) de l'élément de support (13) et configurée pour couper transversalement la bande (2) de matériau pendant le mouvement de la deuxième partie (15) de l'élément de support (13) ;
dans lequel la première partie (14) de l'élément de support (13) et la deuxième partie (15) de l'élément de support (13) sont configurées pour se déplacer de manière au moins partiellement synchrone le long de la direction (PD) parallèle à trajectoire de transport (CP) ;
l'appareil de coupe et de transport (1) comprenant en outre un premier système d'actionneur (17) configuré pour provoquer, au moyen d'un mouvement de rotation, un mouvement intermittent d'au moins la première partie (14) de l'élément de support (13).

2. Appareil (1) selon la revendication 1 et comprenant un deuxième système d'actionneur (3) ; et comprenant une première unité de transport (4), qui comprend une première paire (5) de rouleaux (6) opposés entre lesquels transite ladite bande (2) de matériau et dont au moins un premier rouleau peut être actionné, en rotation, par le deuxième système d'actionneur (3), qui est configuré pour déplacer ladite bande (2) le long de la trajectoire de transport (CP) ; en particulier l'appareil (1) comprend une deuxième unité de transport (9), agencée en aval de la première unité de transport (4) et comprenant une deuxième paire (10) de rouleaux (11) opposés entre lesquels transite ladite bande (2) de matériau ; en particulier, l'unité de coupe (12) est agencée entre la première unité de transport (4) et la deuxième unité de transport (9).

3. Appareil (1) selon la revendication 1 ou 2, dans lequel la deuxième partie (15) de l'élément de support (13) est supportée par la première partie (14) de l'élément de support (13), en particulier dans lequel la deuxième partie (15) de l'élément de support (13) est couplée, de manière coulissante, à la première partie (14) de l'élément de support (13).

4. Appareil (1) selon l'une quelconque des revendications précédentes, dans lequel l'élément de support (13) comprend un corps de base (18) ; et dans lequel la première partie (14) de l'élément de support (13) est supportée par le corps de base (18), en particulier, dans lequel la première partie (14) de l'élément de support (13) est couplée, de manière coulissante, au corps de base (18).

5. Appareil (1) selon l'une quelconque des revendications précédentes, dans lequel la lame (16) est solidaire avec la deuxième partie (15) de l'élément de support (13).

6. Appareil (1) selon l'une quelconque des revendications précédentes, dans lequel l'unité de coupe (12) comprend une contre-lame (19) montée à bord de l'élément de support (13), en particulier à bord de la première partie (14), et configurée pour aider la lame (16) à couper la bande (2) de matériau en fournissant un contraste ; en particulier, la contre-lame (19) est solidaire avec la première partie (14) de l'élément de support (13).

7. Appareil (1) selon l'une quelconque des revendications précédentes et comprenant au moins un élément de support (20) configuré pour supporter et accompagner, en amont ou en aval de la contre-lame (19), un rabat (21, 21') de la bande (2) de matériau, une fois que ce dernier a été coupé.

8. Appareil (1) selon l'une quelconque des revendications précédentes, dans lequel, dans la deuxième paire (10) de rouleaux (11), au moins un deuxième rouleau peut être actionné, en rotation, en particulier de manière synchrone avec le premier rouleau, afin de déplacer ladite bande (2) le long de la trajectoire de transport (CP).

9. Appareil (1) selon l'une quelconque des revendications précédentes, dans lequel la première et/ou la deuxième paire (10) de rouleaux (6, 11) est (sont) configurées pour être ouverte(s), en particulier suite à la coupe, afin d'accueillir un rabat (21, 21') coupé de la bande (2) de matériau avancé au moyen de la première unité de transport (4).

10. Appareil (1) selon l'une quelconque des revendications précédentes, dans lequel la bande (2) de matériau est une bande (2) d'électrode (E).

11. Appareil (1) selon l'une quelconque des revendications précédentes, dans lequel la deuxième partie (15) de l'élément de support (13) est configurée pour réaliser un mouvement sensiblement circulaire.

12. Appareil (1) selon l'une quelconque des revendications précédentes, dans lequel la première partie (14) et la deuxième partie (15) de l'élément de support (13) sont toutes deux déplacées par le premier système d'actionneur (17).

13. Machine (30) pour la production de dispositifs de stockage d'énergie électrique comprenant : un appareil (1) selon l'une quelconque des revendications 1 à 12 ; un système d'alimentation (31), configuré pour alimenter une bande (2) de matériau à enrouler le long de la trajectoire de transport (CP) ; et un appareil d'enroulement (1) comprenant un noyau (33) sur lequel enrouler la bande (2) de matériau formant un enroulement (34).

14. Procédé pour la production de dispositifs de stockage d'énergie électrique comprenant les étapes comprenant les faits de :
- transporter une bande (2) de matériau au moyen d'une première unité de transport (4) comprenant une première paire (5) de rouleaux (6) opposés, entraînant en rotation, au moins un premier rouleau afin de déplacer ladite bande (2) le long d'une trajectoire de transport (CP) ;
- supporter, au moyen d'une deuxième unité de transport (9) comprenant une deuxième paire (10) de rouleaux (11) opposés, ladite bande (2) de matériau ;
- couper la bande (2) de matériau au moyen d'une unité de coupe (12) placée entre la première unité de transport (4) et la deuxième unité de transport (9), et **caractérisé en ce qu'**il comprend un élément de support (13), qui comprend à son tour, une première partie (14) mobile le long d'une première direction (PD) parallèle à la trajectoire de transport (CP), et une deuxième partie (15) mobile au moins le long d'une deuxième direction (TD) transversale à la trajectoire de transport (CP) ; dans lequel l'unité de coupe (12) comprend en outre une lame (16), montée à bord de la deuxième partie (15) de l'élément de support (13), qui coupe transversalement la bande (2) de matériau pendant le mouvement de la deuxième partie (15) de l'élément de support (13) ;
dans lequel la première partie (14) de l'élément de support (13) et la deuxième partie (15) de l'élément de support (13) sont déplacées au moins partiellement de manière synchrone le long de la direction (PD) parallèle à trajectoire de transport (CP) ;
dans lequel, pendant l'étape de coupe, un premier système d'actionneur (17) est commandé, de manière rotative, afin de provoquer, au moyen d'un mouvement de rotation, un mouvement intermittent au moins de la première partie (14) de l'élément de support (13).

15. Procédé selon la revendication 14, dans lequel la bande (2) de matériau est une bande (2) d'électrode (E) ; le procédé comprenant l'étape supplémentaire comprenant le fait d'enrouler ladite bande (2) d'électrode (E) autour d'un noyau d'enroulement (33).
